Europäisches Patentamt

**European Patent Office**

**Office européen des brevets**

(19)

(11) Publication number:
**0 204 361**
**B1**

## (12) EUROPEAN PATENT SPECIFICATION

(45) Date of publication of the patent specification:
28.02.90

(21) Application number: 86200855.4

(22) Date of filing: 20.05.86

(51) Int. Cl.⁴: **H01F 1/18**
// G11B5/127

(54) Magnetic core.

(30) Priority: 24.05.85 NL 8501491

(43) Date of publication of application:
10.12.86 Bulletin 86/50

(45) Publication of the grant of the patent:
28.02.90 Bulletin 90/9

(84) Designated Contracting States:
AT DE FR GB NL

(73) Proprietor: N.V. Philips' Gloeilampenfabrieken,
Groenewoudseweg 1, NL-5621 BA Eindhoven(NL)

(72) Inventor: Verbunt, Johannes Petrus Maria, c/o Int.
Octrooibureau B.V. Prof. Holstlaan 6, NL-5656 AA
Eindhoven(NL)

(74) Representative: Koppen, Jan et al, INTERNATIONAAL
OCTROOIBUREAU B.V. Prof. Holstlaan 6, NL-5656 AA
Eindhoven(NL)

(56) References cited:
EP-A- 0 130 652
DE-A- 2 659 820
GB-A- 2 059 168
US-A- 3 902 087

PATENTS ABSTRACTS OF JAPAN, vol. 6,
no. 145 (P-132)[1023], 4th August 1982; & JP - A
- 57 64 319
PATENTS ABSTRACTS OF JAPAN, vol. 6,
no. 182 (E-131)[1060], 18th September 1982; & JP - A
- 57 95 608
PATENTS ABSTRACTS OF JAPAN, vol. 8,
no. 75 (P-266)[1512], 7th April 1984; & JP - A - 58 220 242
PATENTS ABSTRACTS OF JAPAN, vol. 7, no. 198,
(P-220)[1343], 2nd September 1983; & JP - A - 58 97 122
PATENTS ABSTRACTS OF JAPAN, vol. 5,

(56) References cited: (continuation)
no. 126 (P-75)[798], 14th August 1981; & JP - A
- 56 65 326
PATENTS ABSTRACTS OF JAPAN, vol. 6,
no. 70 (P-113)[948], 6th May 1982; & JP - A - 57 89 16
PATENTS ABSTRACTS OF JAPAN, vol. 7,
no. 58 (E-163)[1203], 10th March 1983; & JP - A
- 57 204 104
PATENTS ABSTRACTS OF JAPAN, vol. 7,
no. 212 (P-224)[1357], 20th September 1983; & JP - A
- 58 105 419

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to a magnetic core, comprising a first lamellar core part of amorphous, ferromagnetic material which is bonded by means of an epoxy adhesive to a second lamellar core part or to a substrate.

Magnetic cores having core parts of amorphous, ferromagnetic material are used, inter alia, in magnetic heads (paricularly for video applications) and in transformers. When assembling the core parts into one core, one of the difficulties is the realization of a satisfactory bond.

Glass is a frequently used bonding material in conventional magnetic heads. However, glass is not suitable in this case, because its high processing temperature (higher than 300°C) degrades the magnetic properties of the amorphous, ferromagnetic metal of the core parts. To prevent this degradation, the bond must be created in a temperature range below 200°C.

Epoxy compounds are frequently used as bonding agents when bonding metals. Those epoxy compounds which provide a satisfactory bond have, however, the drawback for this application that they have a high viscosity. This high viscosity prevents the realization of very thin bonding layers. When lamellar cores of amorphous, ferromagnetic material are used in magnetic heads, it is important that the bonding layers between the lamellas are as thin as possible (particularly thinner than 0.1 μm) in order to obtain the best possible writing efficiency. (The thicker the seams, the less magnetic material remains in the case of a given track width). However, in connection with eddy current losses, they must provide satisfactory insulation between the core parts. In addition it is important for the bonding layer between head core and substrate to be as thin as possible. If the bonding layer is thick, there are likely to be problems when grinding a tape contact face profile on the head. Chamfers may be produced both on the substrate and on the head core, resulting in spacing losses and/or efficiency losses.

There are epoxy compounds having a low viscosity, as known from document DE-A 2 659 820 and which thus provide the possibility of a thin bonding layer. These epoxy compounds have, however, the drawback that they do not bond satisfactorily to an amorphous, ferromagnetic material surface.

The invention provides a solution to the above-mentioned problems. This solution is characterized in that the surfaces of the lamellar core parts of amorphous, ferromagnetic material are coated with a film of a material chosen from the group comprising $TiO_2$, $SiO_2$, $Al_2O_3$ and $Si_3N_4$.

An advantage of $Si_3N_4$ is that it can be sputtered very thinly and yet constitutes a closed film. Coating the lamellas with a thin film of one of these materials enables the use of epoxy adhesives having a low viscosity, particularly a viscosity at room temperature of less than 1 Pa.s and even a viscosity at room temperature of less than 500 mPa.s, while still providing great bonding strength.

An embodiment of the invention will be described with reference to the drawing, in which:

Figure 1 is a perspective view of a magnetic core for a magnetic head, and
Figure 2 is a perspective view of a magnetic head in which the magnetic core of Figure 1 is used.

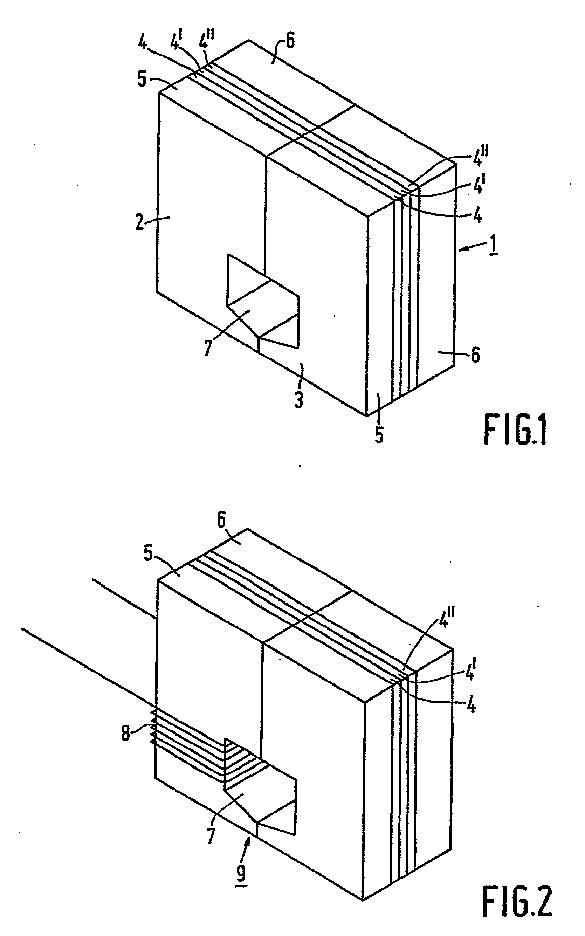

Figure 1 shows an embodiment of a magnetic core 1 for a magnetic head. Magnetic core 1 is formed by two half cores 2, 3 which are bonded together. Each half core consists of three lamellar core parts 4, 4', 4" of amorphous, ferromagnetic metal having a thickness of approximately 7 μm, placed between two protective blocks 5, 6.

A material having the composition $Fe_5Co_{70}B_{10}Si_{15}$ is suitable, for example, as the amorphous, ferromagnetic material for the lamellar magnetic cores, or more generally a material based on Fe Co Si B. Other amorphous magnetic materials applicable in magnetic head cores are, for example, materials based on Co Zr Mo Cr, or based on Co Mn Si B, or based on Co Nb Zr (for example, $Co_{18}Nb_{13}Zr_6$). The surfaces of the core parts 4, 4', 4" are coated with a film of $SiO_2$ applied by means of plasma deposition or sputtering and having a thickness of between 50 and 500 Å, and they are bonded by means of an epoxy adhesive having a low viscosity, such as Epotek 330 to which 1 vol.% of a primer, such as α-glycidoxy-propyl-trimethoxy-silane has been added (by heating at 130° C for 1 hour). Epotek 330 is the tradename for a 2-component thermohardener from the firm Epoxy Technology Inc. The viscosity at 24° C is 375 mPa.s. An additional advantage of the use of an epoxy adhesive having a low viscosity as a bonding agent is that only little pressure needs to be exerted on the core parts during the bonding process (for example, several hundred grammes per cm²). A drawback of having to exert a high pressure (for example, several tens of kg/cm² as is required in glass cementing techniques) is that the core parts may be locally pressed together because they are often not exactly flat, causing short circuits and an increase of the eddy current losses. The total thickness of the lamellar core part is approximately 22 μm. The space between the two core halves 2, 3 (the gap length) is 0.3 μm.

The magnetic core 1 of Figure 1 is shown as a complete magnetic head 9 (Figure 2) by providing it with a winding 8 wound through a winding aperture 7. This head had a writing efficiency of 50%, a quality factor 4 at 5.4 MHz and a signal-to-noise ratio of 105 dB.

In addition to other ceramic materials, a suitable material for the protective blocks 5, 6 is Macor. The core parts 4, 4" may be bonded thereto with the aid of the same bonding agent as is used for their mutual bonding.

MnZn-ferrite is a suitable protective block material for certain uses. In that case the bonding strength is improved if, in addition to the core parts 4, 4", the surface of the MnZn-ferrite protective block to be bonded is also coated with an oxide film of $SiO_2$, $TiO_2$, $Al_2O_3$ or $Si_3N_4$.

When an $SiO_2$ film is used, the bonding strength of the epoxy bond is found to be a factor of 10 higher than the bonding strength without the use of the $SiO_2$ film. In the case of $Al_2O_3$ the bonding strength is found to a factor of 7 higher and in the case of $TiO_2$ it is found to be a factor of 5 higher. In all cases the bonding strength may be further increased by adding a silane to the epoxy adhesive.

The conditions under which the aforementioned films were sputtered on the surfaces of the core parts were as follows :

|  | Power | Pressure | Atmosphere | Deposition rate |
|---|---|---|---|---|
| $SiO_2$ | 350 W | 20mTorr | argon | $100 \text{Å}/\text{min}$ |
| $Al_2O_3$ | 400 W | 10mTorr | argon | $40 \text{Å}/\text{min}$ |
| $TiO_2$ | 300 W | 10mTorr | argon + 1 mTorr $O_2$ | $40 \text{Å}/\text{min}$ |

## Claims

1. A magnetic core comprising a first lamellar core part of amorphous, ferromagnetic material which is bonded by means of an epoxy adhesive to a second lamellar core part or to a substrate, characterized in that the surfaces of the lamellar core parts are coated with a thin film of a material chosen from the group comprising $TiO_2$, $SiO_2$, $Al_2O_3$ and $Si_3N_4$.

2. A magnetic core as claimed in Claim 1, characterized in that the epoxy adhesive used has a viscosity of less than 1 Pa.s at room temperature.

3. A magnetic core as claimed in Claim 1, characterized in that the epoxy adhesive used has a viscosity of less than 500 mPa.s at room temperature.

## Patentansprüche

1. Magnetkern mit einem ersten aus amorphem, ferromagnetischem Werkstoff bestehenden lamellenförmigen Kernteil, der mittels eines Epoxyklebers mit einem zweiten lamellenförmigen Kernteil oder mit einem Träger verbunden ist, dadurch gekennzeichnet, daß die Oberflächen der lamellenförmigen Kernteile aus amorphem, ferromagnetischem Werkstoff mit einer dünnen Schicht eines Materials aus der Gruppe $TiO_2$, $SiO_2$, $Al_2O_3$ und $Si_3N_4$ bedeckt sind.

2. Magnetkern nach Anspruch 1, dadurch gekennzeichnet, daß der verwendete Epoxykleber bei Raumtemperatur eine Viskosität hat von weniger als 1 Pa.s.

3. Magnetkern nach Anspruch 1, dadurch gekennzeichnet, daß der verwendete Epoxykleber bei Raumtemperatur eine Viskosität hat von weniger als 500 mPa.s.

## Revendications

1. Noyau magnétique comportant une première partie de noyau lamellaire en un matériau ferromagnétique amorphe, qui est collée à l'aide d'un adhésif époxy à une deuxième partie de noyau lamellaire ou à un substrat, caractérisé en ce que les surfaces des parties de noyau lamellaires de matériau ferromagnétique amorphe sont revêtues d'un film en un matériau choisi dans le groupe constitué par $TiO_2$, $SiO_2$, $Al_2O_3$ et $Si_3N_4$.

2. Noyau magnétique selon la revendication 1, caractérisé en ce que l'adhésif époxy utilisé présente une viscosité inférieure à 1 Pa.s à la température ambiante normale.

3. Noyau magnétique selon la revendication 1, caractérisé en ce que l'adhésif époxy utilisé présente une viscosité inférieure à 500 mPa.s à la température ambiante normale.

FIG.1

FIG.2